# FASCICULE DE BREVET EUROPEEN

(11) **EP 3 067 661 B1**
(45) Date de publication et mention de la délivrance du brevet: **15.11.2017**
(21) Numéro de dépôt: 16159697.8
(22) Date de dépôt: 10.03.2016
(51) Int. Cl.: G01C 21/20, G09F 9/00, G08G 1/005, G06Q 90/00, H04W 4/02

(54) **PROCÉDÉ DE COMMANDE D'UN RÉSEAU DE DISPOSITIFS DE FLÉCHAGE DYNAMIQUE ET SYSTÈME DE GUIDAGE CONFIGURÉ POUR METTRE EN OEUVRE UN TEL PROCÉDÉ**
STEUERVERFAHREN EINES NETZES AUS VORRICHTUNGEN ZUR DYNAMISCHEN AUSSCHILDERUNG, UND KONFIGURIERTES LEITSYSTEM ZUR AUSFÜHRUNG DIESES VERFAHRENS
METHOD FOR CONTROLLING A NETWORK OF DYNAMIC DIRECTION SIGNAGE DEVICES AND GUIDING SYSTEM CONFIGURED TO IMPLEMENT SUCH A METHOD

(30) Priorité: 11.03.2015 FR 1552011
(43) Date de publication de la demande: 14.09.2016
(73) Titulaire: Charvet Industries, 01700 Miribel (FR)
(72) Inventeur: QUATRINI, Christophe, 69270 Fontaines Saint Martin (FR)
(74) Mandataire: Chevalier, Renaud Philippe

(56) Documents cités:
- WO-A2-2009/016402
- DE-A1- 4 314 286
- JP-A- 2007 048 132
- US-A1- 2004 051 644

## Description

La présente invention concerne le domaine des panneaux directionnels à contenu dynamique. Ces panneaux prennent place en général dans les lieux à forte affluence par exemple des centres commerciaux, villes et parcs d'attractions, etc.

Classiquement, les panneaux directionnels à contenu dynamique ou dispositif de fléchage dynamique comprennent une surface graphique électronique permettant de modifier à volonté le contenu de l'information. Leurs flèches motorisées permettent de pointer indépendamment l'une de l'autre, n'importe quelle direction sur 360°.

Grâce à ce type de dispositif de fléchage dynamique, il est possible de couvrir l'intégralité des événements ou lieux d'un périmètre donné en limitant grandement la multiplicité du nombre de flèches par rapport au nombre d'événements ou lieux.

Malgré la haute technologie embarquée au sein de ces dispositifs de fléchage dynamique, ces derniers se démarquent peu des dispositifs de fléchage statiques classiques et non personnalisables par un utilisateur lambda. Le document WO2009/016402 A2 décrit un procédé de commande d'un réseau de dispositifs de fléchage dynamique où chaque dispositif comprend un organe d'affichage directionnel. Le procédé compare la position d'un utilisateur avec une destination collectée et génère des signaux de commande permettant à au moins un dispositif de fléchage d'indiquer des informations de direction vers la destination, les informations étant relayées par plusieurs dispositifs ayant chacun leur zone de couverture.

D'autres dispositifs de fléchage dynamiques sont également connus de US2004/051644 A1, DE4314286 A1 ou encore JP2007048132 A. L'invention a pour but de remédier à tout ou partie des inconvénients précités.

L'invention a pour objet un procédé de commande d'un réseau de dispositifs de fléchage dynamique, selon la revendication 1. Le procédé comprend entre autres les étapes suivantes :
- Etape E1 : Collecte de la destination de l'utilisateur,
- Etape E2 : Détection d'un utilisateur dans un périmètre de détection d'un dispositif de fléchage dynamique déterminé,
- Etape E3 : Comparaison de la destination par rapport à la position et à une zone de couverture du dispositif de fléchage dynamique déterminé, lorsque la destination est hors de la zone de couverture du dispositif de fléchage dynamique déterminé, et détermination d'un itinéraire en choisissant au moins un dispositif de fléchage dynamique du réseau qui relaiera le dispositif de fléchage dynamique déterminé,

Etape E4 : Envoi par le serveur d'un premier signal de commande au dispositif de fléchage dynamique déterminé, le signal de commande indiquant l'angle de rotation que doit prendre l'organe d'affichage directionnel du dispositif de fléchage dynamique déterminé,
- Etape E5 : Envoi par le serveur d'un deuxième signal de commande au dispositif de fléchage dynamique déterminé, le deuxième signal de commande indiquant au moins la destination de l'utilisateur.

Ainsi, grâce à l'invention, il est possible de personnaliser le guidage de l'utilisateur jusqu'à sa destination sans avoir recours à un équipement de navigation supplémentaire externe.

Selon l'invention, la présence de l'utilisateur dans le périmètre de détection du dispositif de fléchage dynamique déterminé est détectée par un terminal utilisateur par comparaison des coordonnées de position de l'utilisateur avec la position du dispositif de fléchage dynamique déterminé, la présence de l'utilisateur dans le périmètre de détection étant transmise à au moins un serveur qui déclenche les étapes E3, E4 et E5.

Selon l'invention, le procédé de commande comprend une étape supplémentaire E1a de collecte de la position de l'utilisateur et une étape E1b d'obtention de l'identité du dispositif de fléchage dynamique le plus proche de l'utilisateur à partir de la comparaison des données collectées aux étapes E1, E1a avec une cartographie du réseau de dispositifs de fléchage dynamique, la cartographie indiquant la position de chaque dispositif de fléchage dynamique et leur zone de couverture, les étapes E1a et E1b étant préalables à l'étape E2.

Ainsi, l'utilisateur est amené dans le périmètre de détection d'un dispositif de fléchage dynamique déterminé, en l'espèce le dispositif de fléchage dynamique le plus proche de la position de l'utilisateur.

Selon une autre caractéristique de l'invention, les étapes E3, E4 et E5 sont déclenchées que lorsque l'utilisateur entre dans un périmètre de détection du dispositif de fléchage dynamique déterminé.

Selon une caractéristique de l'invention, tant que le terminal utilisateur est dans le périmètre de détection du dispositif de fléchage dynamique déterminé, le serveur répète au moins l'étape E1, E1e et E1f. Pour ce faire, le terminal utilisateur envoie en continu au serveur la position de l'utilisateur tant qu'il est dans le périmètre de détection du dispositif de fléchage dynamique déterminé.

Avantageusement, le périmètre de détection d'un dispositif de fléchage dynamique est inférieur ou égal à la zone de couverture dudit dispositif de fléchage dynamique.

Préférentiellement, le périmètre de détection de chaque dispositif de fléchage dynamique est défini en fonction du mode de locomotion de l'utilisateur.

Avantageusement, la position de l'utilisateur correspond à des coordonnées utilisant le système de localisation mondial couramment appelé « GPS » ou « Global Positioning System ».

Selon une caractéristique de l'invention, les étapes E1 et E1a peuvent être réalisées simultanément ou consécutivement.

Selon une autre caractéristique de l'invention, les étapes E4 et E5 peuvent être réalisées simultanément ou consécutivement.

Selon une caractéristique de l'invention, le procédé de commande comprend une sous-étape E1e dans laquelle le terminal utilisateur envoie au serveur les données collectées au moins aux étapes E1 et E1a.

Selon une caractéristique de l'invention, le procédé de commande comprend une sous-étape E1f dans laquelle le serveur réceptionne les données collectées et envoyées par le terminal utilisateur.

Selon une caractéristique de l'invention, l'identité du dispositif de fléchage dynamique le plus proche de l'utilisateur est déterminée par le terminal utilisateur et est envoyée au serveur.

Selon une caractéristique de l'invention, lorsqu'on détermine l'identité du dispositif de fléchage dynamique le plus proche de l'utilisateur à partir du terminal utilisateur, le procédé de commande comprend une première sous-étape E2a préalable à l'étape E1b dans laquelle le serveur envoie la position de chacun des dispositifs de fléchage dynamique du réseau, une deuxième sous-étape E2b préalable à l'étape E1b dans laquelle le terminal utilisateur réceptionne les positions de chaque dispositif de fléchage dynamique.

Alternativement et selon une caractéristique de l'invention, l'identité du dispositif de fléchage dynamique le plus proche de l'utilisateur est déterminée par le serveur.

Selon une caractéristique de l'invention, lorsqu'on détermine l'identité du dispositif de fléchage dynamique le plus proche de l'utilisateur à partir du serveur, l'étape E1b est réalisée sans sous-étape préalable.

Selon une autre caractéristique de l'invention, ledit procédé de commande comprend une étape E1c supplémentaire dans laquelle on collecte le mode de locomotion de l'utilisateur, l'étape E1c étant réalisée avant l'étape E1b.

Selon une caractéristique de l'invention, l'étape E1c est réalisée soit simultanément ou soit consécutivement à au moins l'une des étapes E1a et/ou E1.

Selon une caractéristique de l'invention, la collecte du mode de locomotion est réalisée par le terminal utilisateur.

Selon une caractéristique de l'invention, le terminal utilisateur envoie au serveur le mode de locomotion de l'utilisateur avant que l'étape E3 ne soit réalisée de manière à ce que la détermination de l'itinéraire de l'étape E3 soit réalisée au moins en fonction des données collectées aux étapes E1, E1a et E1c.

Selon une autre caractéristique de l'invention, ledit procédé de commande comprend une étape E1d supplémentaire dans laquelle on collecte un marqueur visuel d'identification de l'utilisateur, l'étape E1d étant réalisée avant l'étape E5.

Selon une caractéristique de l'invention, le procédé de commande comprend une étape E1g, dans laquelle le serveur associe la destination collectée à l'étape E1 à un événement et communique au terminal utilisateur ledit événement.

Selon une caractéristique de l'invention, la collecte du marqueur visuel d'identification de l'utilisateur est réalisée par le terminal utilisateur.

Selon une caractéristique de l'invention, le terminal utilisateur envoie au serveur le marqueur visuel d'identification de l'utilisateur avant que l'étape E5 ne soit réalisée de manière à ce qu'au cours de l'étape E5, le deuxième signal de commande ordonne également l'affichage dudit marqueur visuel d'identification de l'utilisateur.

Par exemple, le marqueur visuel d'identification de l'utilisateur est un message et/ou un signal lumineux et/ou un pseudonyme.

Selon une caractéristique de l'invention, l'organe d'affichage directionnel affiche le marqueur visuel d'identification de l'utilisateur à intervalle régulier, par exemple toutes les 10 secondes.

Selon une caractéristique de l'invention, l'organe d'affichage directionnel est configuré pour afficher un ou des événements ou destinations prédéterminés et pour s'orienter dans la direction du ou des événements ou destinations prédéterminés.

Selon une caractéristique de l'invention, le procédé de commande comprend en outre une étape supplémentaire E6 d'arrêt d'affichage dans laquelle le serveur envoie un troisième signal de commande au dispositif de fléchage dynamique le plus proche de l'utilisateur indiquant l'arrêt de l'affichage de l'organe directionnel du dispositif de fléchage dynamique le plus proche de l'utilisateur.

Selon une caractéristique de l'invention, l'étape E6 est déclenchée après un temps prédéterminé d'affichage.

Alternativement ou en complément, l'étape E6 est déclenchée lorsque l'utilisateur sort du périmètre de détection du dispositif de fléchage dynamique le plus proche de l'utilisateur.

Alternativement, l'étape E6 est déclenchée lorsque le terminal utilisateur n'envoie plus en continu la position de l'utilisateur au serveur, l'absence de signal du terminal étant considéré par le serveur comme l'absence d'utilisateur dans le périmètre de détection du dispositif de fléchage dynamique.

Ainsi, tant que l'utilisateur est dans le périmètre de détection du dispositif de fléchage dynamique le plus proche de l'utilisateur, sa destination s'affiche à intervalle régulier sur l'organe d'affichage directionnel dudit dispositif de fléchage dynamique.

Selon une caractéristique de l'invention, la sortie de l'utilisateur dans le périmètre de détection du dispositif de fléchage dynamique le plus proche de l'utilisateur est détectée par le terminal utilisateur par comparaison des données de position de l'utilisateur avec la position du dispositif de fléchage dynamique le plus proche de l'utilisateur, la sortie de l'utilisateur dans le périmètre de détection étant transmise au serveur qui déclenche l'étape E6.

L'invention a également pour objet un système de guidage dans une zone donnée, selon la revendication 1, agencé pour mettre en oeuvre le procédé de commande selon l'invention, ledit système de guidage comprenant au moins un réseau de dispositifs de fléchage dynamique, au moins un serveur configuré pour recevoir des données d'un terminal utilisateur, ledit serveur commandant chaque dispositif de fléchage dynamique du réseau en fonction des données envoyées par le terminal utilisateur.

Selon une caractéristique de l'invention, les données reçues par le serveur et envoyées par le terminal utilisateur sont des données d'identification d'utilisateur et/ou des données de géo-localisation et/ou des données d'identification d'un dispositif de fléchage dynamique et/ou des données portant sur le mode de locomotion de l'utilisateur et/ou des données portant sur la destination de l'utilisateur.

Selon une caractéristique de l'invention, le réseau de dispositifs de fléchage dynamique comprend au moins un premier et un deuxième dispositif de fléchage dynamique, chaque dispositif de fléchage dynamique étant actif dans une zone de couverture prédéterminée, chaque dispositif de fléchage dynamique comprenant au moins un organe d'affichage directionnel configuré pour indiquer au moins une information selon une orientation déterminée.

Selon une caractéristique de l'invention, le réseau de dispositifs de fléchage dynamique est un réseau maillé.

Dans la présente invention, on entendra par réseau maillé le fait que chaque dispositif de fléchage dynamique du réseau soit regroupé dans un maillage dont l'intelligence, en l'espèce le serveur, est centralisée et déportée.

Selon une caractéristique de l'invention, chaque dispositif de fléchage dynamique présente un périmètre de détection d'utilisateur.

Avantageusement, chaque zone de couverture de chaque dispositif de fléchage dynamique recouvre au moins partiellement au moins une autre zone de couverture d'un autre dispositif de fléchage dynamique.

Préférentiellement, le périmètre de détection de chaque dispositif de fléchage dynamique est défini en fonction du mode de locomotion de l'utilisateur. Par exemple, lorsque l'utilisateur se déplace à pied, le périmètre de détection est de 40m environ. Par exemple, lorsque l'utilisateur se déplace à vélo, le périmètre de détection est de 60m environ.

Selon une caractéristique de l'invention, au moins l'organe d'affichage directionnel du premier dispositif de fléchage dynamique comprend au moins un support, au moins un organe de motorisation configuré pour permettre le déplacement en rotation de l'organe d'affichage directionnel par rapport audit support, ledit organe de motorisation étant commandé par une unité de commande destinée à être reliée à un serveur.

Selon une caractéristique de l'invention, au moins l'organe d'affichage directionnel du premier dispositif de fléchage dynamique comprend une zone équipée d'éléments lumineux.

Selon une caractéristique de l'invention, au moins l'organe d'affichage directionnel du premier dispositif de fléchage dynamique comprend une zone graphique configurée pour afficher au moins une information, par exemple la destination de l'utilisateur.

Selon une caractéristique de l'invention, l'information peut être également un marqueur visuel d'identification de l'utilisateur tel qu'un message et/ou un signal lumineux et/ou un pseudonyme.

L'invention sera mieux comprise, grâce à la description ci-après, qui se rapporte à des modes de réalisation selon la présente invention, donné à titre d'exemple non limitatif et expliqué en référence aux dessins schématiques annexés dans lesquels :
- la figure 1 représente le système de guidage selon l'invention selon un mode de réalisation,
- la figure 2 représente le système de guidage selon l'invention selon une variante du mode de réalisation représenté en figure 1.

La présente invention concerne un procédé de commande d'un réseau de dispositifs de fléchage dynamique et d'un système de guidage permettant de mettre en oeuvre ledit procédé de commande.

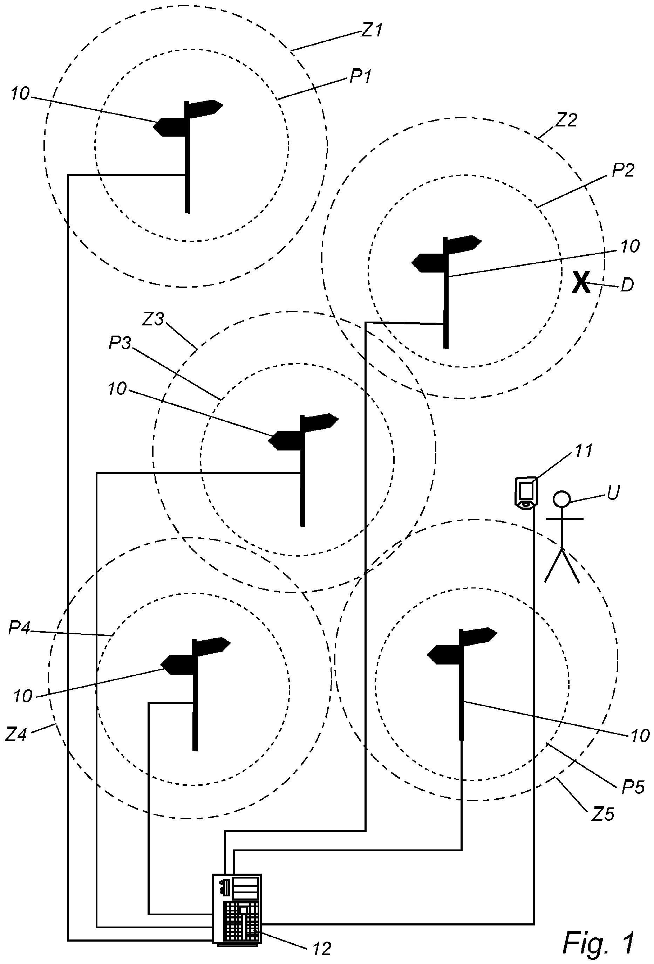

En figure 1 est représenté le système de guidage 1 selon l'invention selon un mode de réalisation, le système de guidage 1 comprend au moins un réseau de dispositifs de fléchage dynamique 10, au moins un serveur 12 configuré pour recevoir des données d'un terminal utilisateur 11, ledit serveur 12 commandant chaque dispositif de fléchage dynamique 10 du réseau en fonction des données envoyées par le terminal utilisateur 11.

Chaque dispositif de fléchage dynamique 10 comprend une zone de couverture Z1, Z2, Z3, Z4, Z5, délimitant ensemble un périmètre donné P dans lequel le réseau de dispositifs de fléchage dynamique est implanté et dans lequel le système de guidage est actif.

De plus, chaque dispositif de fléchage dynamique 10 comprend un périmètre de détection d'utilisateur P1, P2, P3, P4, P5. La zone de couverture Z1, Z2, Z3, Z4, Z5 de chaque dispositif de fléchage dynamique peut être identique ou plus large que le périmètre de détection d'utilisateur P1, P2, P3, P4, P5.

Chaque dispositif de fléchage dynamique comprend un organe d'affichage directionnel monté sur un support. L'organe d'affichage directionnel comprend une zone graphique configurée pour afficher des données visuelles. L'organe d'affichage directionnel est mobile en rotation autour de son support de manière à indiquer une direction. L'organe d'affichage directionnel comprend un bord périphérique équipé d'éléments lumineux tels que des DELs.

Le détail du procédé de commande va maintenant être décrit la référence aux étapes sera mis entre parenthèses.

Lorsqu'un utilisateur U souhaite utiliser le réseau de dispositifs de fléchage dynamique pour se rendre à une destination D, le terminal utilisateur 11 de l'utilisateur U doit avoir une application dédiée et conçue pour communiquer avec le réseau de dispositifs de fléchage dynamique à travers au moins un serveur 12.

Une fois l'application téléchargée et un compte utilisateur créé, on collecte la position de l'utilisateur (E1a), la destination de l'utilisateur (E1) et optionnellement le mode de locomotion (E1c), un marqueur visuel d'identification (E1d). Cette collecte peut être effectuée soit par un serveur 12 soit par le terminal utilisateur 11. Dans le cas où il s'agit du terminal utilisateur 11 qui collecte les données, le terminal utilisateur 11 envoie lesdites données à un serveur 12 (E1e) qui les réceptionne (E1f).

Une fois la collecte réalisée, on obtient l'identité du dispositif de fléchage dynamique 10 le plus proche de l'utilisateur U (E1b) à partir de la comparaison des données collectées précédemment avec une cartographie du réseau de dispositifs de fléchage dynamique, la cartographie indiquant la position de chaque dispositif de fléchage dynamique 10 et leur zone de couverture Z1, Z2, Z3, Z4, Z5.

Dans le cas où, obtention du dispositif de fléchage dynamique le plus proche de l'utilisateur U est réalisée par le terminal utilisateur 11, le serveur 12 communique audit terminal utilisateur 11 la position de chaque dispositif de fléchage dynamique 10 (E2a) et le terminal utilisateur 11 réception cette cartographie (E2b).

En outre, le serveur associe la destination à un événement le cas échéant et communique au terminal utilisateur ledit événement.

Après identification du dispositif de fléchage dynamique le plus proche de l'utilisateur U, le serveur 12 compare la destination par rapport à la position et à la zone de couverture du dispositif de fléchage dynamique le plus proche de l'utilisateur U (E3), lorsque la destination est hors de la zone de couverture du dispositif de fléchage dynamique le plus proche de l'utilisateur U, le serveur 12 détermine un itinéraire en choisissant quel(s) dispositif(s) de fléchage dynamique relaiera le dispositif de fléchage dynamique 10 le plus proche de l'utilisateur U, la détermination de l'itinéraire est réalisée au moins en fonction des données collectées aux étapes E1a, E1 et optionnellement E1c.

Après détermination de l'itinéraire, le serveur envoie (E4) un premier signal de commande au dispositif de fléchage dynamique le plus proche de l'utilisateur U, le signal de commande indiquant l'angle de rotation que doit prendre l'organe d'affichage directionnel du dispositif de fléchage dynamique le plus proche de l'utilisateur U. En outre, le serveur 12 envoie (E5) également un deuxième signal de commande au dispositif de fléchage dynamique le plus proche de l'utilisateur U, le deuxième signal de commande indiquant au moins la destination de l'utilisateur ou l'événement associé.

Les étapes E3, E4 et E5 sont avantageusement déclenchées lorsque l'utilisateur U est présent dans le périmètre de détection P1, P2, P3, P4, P5du dispositif de fléchage dynamique le plus proche de l'utilisateur U.

Selon une caractéristique de l'invention, la présence de l'utilisateur dans le périmètre de détection du dispositif de fléchage dynamique le plus proche de l'utilisateur U est détectée par le terminal utilisateur 11 par comparaison des coordonnées de position de l'utilisateur avec la position du dispositif de fléchage dynamique le plus proche de l'utilisateur U, la présence de l'utilisateur U dans le périmètre de détection étant transmise au serveur 12 qui déclenche les étapes E3, E4 et E5.

Lorsque l'utilisateur sort du périmètre de détection P1, P2, P3, P4, P5 du dispositif de fléchage dynamique le plus proche de l'utilisateur U alors, le terminal utilisateur envoie un signal d'absence dans le périmètre de détection au serveur 12, ledit serveur 12 envoie (E6) alors un troisième signal de commande au dispositif de fléchage dynamique le plus proche de l'utilisateur U indiquant l'arrêt de l'affichage de l'organe directionnel du dispositif de fléchage dynamique le plus proche de l'utilisateur U.

Avantageusement, la sortie de l'utilisateur U dans le périmètre de détection du dispositif de fléchage dynamique le plus proche de l'utilisateur U est détectée par le terminal utilisateur par comparaison des données de position de l'utilisateur avec la position du dispositif de fléchage dynamique le plus proche de l'utilisateur U, la sortie de l'utilisateur U dans le périmètre de détection P1, P2, P3, P4, P5 étant transmise au serveur 12 qui déclenche l'étape E6.

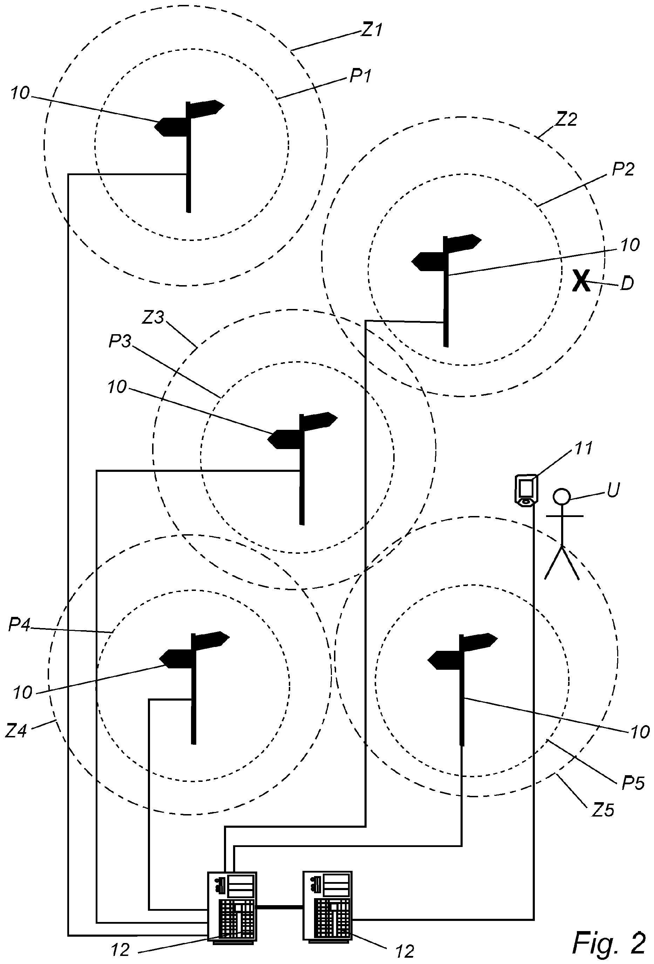

Dans la variante représentée en figure 2, seul le fait que le système de guidage comprend deux serveurs 12 change. Ainsi, un serveur communique exclusivement avec le terminal utilisateur et l'autre serveur est en charge de commander le réseau de dispositifs de fléchage dynamique.

Bien entendu, l'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention, tel que défini dans les revendications ci-jointes.

## Revendications

1. Procédé de commande d'un réseau de dispositifs de fléchage dynamique, chaque dispositif de fléchage dynamique (10) comprenant au moins un organe d'affichage directionnel configuré pour indiquer au moins une information selon une orientation déterminée, comprenant les étapes suivantes :
- Etape E1 : Collecte de la destination (D) d'un utilisateur (U),
- Etape E2 : Détection de l'utilisateur (U) dans un périmètre de détection d'un dispositif de fléchage dynamique (10) déterminé,
- Etape E3 : Comparaison de la destination par rapport à la position et à une zone de couverture (Z1, Z2, Z3, Z4, Z5) du dispositif de fléchage dynamique déterminé (10), lorsque la destination (D) est hors de la zone de couverture (Z1, Z2, Z3, Z4, Z5) du dispositif de fléchage dynamique déterminé (10), un itinéraire est déterminé en choisissant au moins un dispositif de fléchage dynamique (10) du réseau qui relaiera le dispositif de fléchage dynamique déterminé (10),
- Etape E4 : Envoi d'un premier signal de commande au dispositif de fléchage dynamique déterminé (10), le signal de commande indiquant l'angle de rotation que doit prendre l'organe d'affichage directionnel du dispositif de fléchage dynamique déterminé (10),
- Etape E5 : Envoi d'un deuxième signal de commande au dispositif de fléchage dynamique déterminé (10), le deuxième signal de commande indiquant au moins la destination (D) de l'utilisateur (U), le procédé étant **caractérisé en ce qu'**il comprend en outre les étapes suivantes :
- Etape E1a : collecte de la position de l'utilisateur (U)
- Etape E1b : obtention de l'identité du dispositif de fléchage dynamique (10) le plus proche de l'utilisateur (U) à partir de la comparaison des données collectées aux étapes E1, E1a avec une cartographie du réseau de dispositifs de fléchage dynamique (10), la cartographie indiquant la position de chaque dispositif de fléchage dynamique (10) et leur zone de couverture (Z1, Z2, Z3, Z4, Z5), les étapes E1a et E1b étant préalables à l'étape E2.

2. Procédé de commande selon la revendication 1, dans lequel la présence de l'utilisateur (U) dans le périmètre de détection (P1, P2, P3, P4, P5) du dispositif de fléchage dynamique déterminé (10) est détectée par un terminal utilisateur (11) par comparaison des coordonnées de position de l'utilisateur (U) avec la position du dispositif de fléchage dynamique déterminé (10), la présence de l'utilisateur (U) dans le périmètre de détection (P1, P2, P3, P4, P5) étant transmise à au moins un serveur (12) qui déclenche les étapes E3, E4 et E5.

3. Procédé de commande selon selon l'une quelconque des revendications 1 ou 2, l'identité du dispositif de fléchage dynamique (10) le plus proche de l'utilisateur (U) est déterminée par un terminal utilisateur (12) et est envoyée à un serveur (12).

4. Procédé de commande selon l'une quelconque des revendications 1 à 3, dans lequel l'identité du dispositif de fléchage dynamique (10) le plus proche de l'utilisateur (U) est déterminée par un serveur (12).

5. Procédé de commande selon l'une quelconque des revendications 1 à 4, comprenant une étape E1c supplémentaire dans laquelle on collecte le mode de locomotion de l'utilisateur (U), l'étape E1c étant réalisée avant l'étape E1b.

6. Procédé de commande selon l'une quelconque des revendications 1 à 5, comprenant une étape E1d supplémentaire dans laquelle on collecte un marqueur visuel d'identification de l'utilisateur (U), l'étape E1d étant réalisée avant l'étape E5.

7. Procédé de commande selon une caractéristique de l'invention 1 à 6, comprenant en outre une étape supplémentaire E6 d'arrêt d'affichage dans laquelle le serveur (12) envoie un troisième signal de commande au dispositif de fléchage dynamique (10) le plus proche de l'utilisateur (U) indiquant l'arrêt de l'affichage de l'organe directionnel du dispositif de fléchage dynamique (10) le plus proche de l'utilisateur (U).

8. Système de guidage (1) dans une zone donnée agencé pour mettre en oeuvre le procédé de commande selon l'une quelconque des revendications 1 à 7, ledit système de guidage (1) comprenant au moins un réseau de dispositifs de fléchage dynamique (10), chaque dispositif de fléchage dynamique (10) comprenant au moins un organe d'affichage directionnel configuré pour indiquer au moins une information selon une orientation déterminée, au moins un serveur (12) configuré pour recevoir des données d'un terminal utilisateur (11), ledit serveur (12) commandant chaque dispositif de fléchage dynamique du réseau (10) en fonction des données envoyées par le terminal utilisateur (11).

9. Système de guidage selon la revendication 8, dans lequel le réseau de dispositifs de fléchage dynamique (10) comprend au moins un premier et un deuxième dispositif de fléchage dynamique (10), chaque dispositif de fléchage dynamique (10) étant actif dans une zone de couverture (Z1, Z2, Z3, Z4, Z5) prédéterminée.

## Patentansprüche

1. Verfahren zur Steuerung eines Netzes von dynamischen Pfeilmarkierungsvorrichtungen, wobei jede dynamische Pfeilmarkierungsvorrichtung (10) mindestens ein Richtungsanzeigeelement umfasst, das zum Angeben mindestens einer Information gemäß einer bestimmten Ausrichtung konfiguriert ist, wobei das Verfahren die folgenden Schritte umfasst:
- Schritt E1: Sammeln des Ziels (D) eines Benutzers (U),
- Schritt E2: Erfassen des Benutzers (U) in einem Erfassungsperimeter einer bestimmten dynamischen Pfeilmarkierungsvorrichtung (10),
- Schritt E3: Vergleichen des Ziels in Bezug auf die Position und auf eine Abdeckungszone (Z1, Z2, Z3, Z4, Z5) der bestimmten dynamischen Pfeilmarkierungsvorrichtung (10), wenn das Ziel (D) außerhalb der Abdeckungszone (Z1, Z2, Z3, Z4, Z5) der bestimmten dynamischen Pfeilmarkierungsvorrichtung (10) liegt, wird eine Reiseroute bestimmt, indem mindestens eine dynamische Pfeilmarkierungsvorrichtung (10) des Netzes ausgewählt wird, die die bestimmte dynamische Pfeilmarkierungsvorrichtung (10) ablösen wird,
- Schritt E4: Senden eines ersten Steuersignals an die bestimmte dynamische Pfeilmarkierungsvorrichtung (10), wobei das Steuersignal den Drehwinkel angibt, der von dem Richtungsanzeigeelement der bestimmten dynamischen Pfeilmarkierungsvorrichtung (10) eingeschlagen werden muss,
- Schritt E5: Senden eines zweiten Steuersignals an die bestimmte dynamische Pfeilmarkierungsvorrichtung (10), wobei das zweite Steuersignal mindestens das Ziel (D) des Benutzers (U) angibt, wobei das Verfahren **dadurch gekennzeichnet ist, dass** es außerdem die folgenden Schritte umfasst:
- Schritt E1a: Sammeln der Position des Benutzers (U),
- Schritt E1b: Beziehen der Identität der dynamischen Pfeilmarkierungsvorrichtung (10), die dem Benutzer (U) am nächsten ist, anhand des Vergleichs von in den Schritten E1, E1a gesammelten Daten mit einer Kartografie des Netzes von dynamischen Pfeilmarkierungsvorrichtungen (10), wobei die Kartografie die Position jeder dynamischen Pfeilmarkierungsvorrichtung (10) und deren Abdeckungszone (Z1, Z2, Z3, Z4, Z5) angibt, wobei die Schritte E1 a und E1b dem Schritt E2 vorangehen.

2. Steuerverfahren nach Anspruch 1, wobei die Anwesenheit des Benutzers (U) in dem Erfassungsperimeter (P1, P2, P3, P4, P5) der bestimmten dynamischen Pfeilmarkierungsvorrichtung (10) von einem Benutzerendgerät (11) durch Vergleich von Positionskoordinaten des Benutzers (U) mit der Position der bestimmten dynamischen Pfeilmarkierungsvorrichtung (10) erfasst wird, wobei die Anwesenheit des Benutzers (U) in dem Erfassungsperimeter (P1, P2, P3, P4, P5) an mindestens einen Server (12) übertragen wird, der die Schritte E3, E4 und E5 auslöst.

3. Steuerverfahren nach einem der Ansprüche 1 oder 2, wobei die Identität der dynamischen Pfeilmarkierungsvorrichtung (10), die dem Benutzer (U) am nächsten ist, von einem Benutzerendgerät (12) bestimmt und an einen Server (12) gesendet wird.

4. Steuerverfahren nach einem der Ansprüche 1 bis 3, wobei die Identität der dynamischen Pfeilmarkierungsvorrichtung (10), die dem Benutzer (U) am nächsten ist, von einem Server (12) bestimmt wird.

5. Steuerverfahren nach einem der Ansprüche 1 bis 4, das einen zusätzlichen Schritt E1c umfasst, in dem der Fortbewegungsmodus des Benutzers (U) gesammelt wird, wobei der Schritt E1c vor dem Schritt E1b durchgeführt wird.

6. Steuerverfahren nach einem der Ansprüche 1 bis 5, das einen zusätzlichen Schritt E1d umfasst, in dem eine optische Markierung zur Identifizierung des Benutzers (U) gesammelt wird, wobei der Schritt E1 d vor dem Schritt E5 durchgeführt wird.

7. Steuerverfahren nach einem Merkmal der Erfindung 1 bis 6, das außerdem einen zusätzlichen Schritt E6 des Stoppens der Anzeige umfasst, in dem der Server (12) ein drittes Steuersignal an die dynamische Pfeilmarkierungsvorrichtung (10), die dem Benutzer (U) am nächsten ist, sendet, die das Stoppen der Anzeige des Richtungselements der dynamischen Pfeilmarkierungsvorrichtung (10), die dem Benutzer (U) am nächsten ist, angibt.

8. Leitsystem (1) in einer gegebenen Zone, die zum Durchführen des Steuerverfahrens nach einem der Ansprüche 1 bis 7 eingerichtet ist, wobei das Leitsystem (1) mindestens ein Netz von dynamischen Pfeilmarkierungsvorrichtungen (10), wobei jede dynamische Pfeilmarkierungsvorrichtung (10) mindestens ein Richtungsanzeigeelement umfasst, das zum Angeben mindestens einer Information gemäß einer bestimmten Ausrichtung konfiguriert ist, mindestens einen Server (12) umfasst, der zum Empfangen von Daten eines Benutzerendgeräts (11) konfiguriert ist, wobei der Server (12) jede dynamische Pfeilmarkierungsvorrichtung des Netzes (10) in Abhängigkeit von Daten, die von dem Benutzerendgerät (11) gesendet werden, steuert.

9. Leitsystem nach Anspruch 8, wobei das Netz von dynamischen Pfeilmarkierungsvorrichtungen (10) mindestens eine erste und eine zweite dynamische Pfeilmarkierungsvorrichtung (10) umfasst, wobei jede dynamische Pfeilmarkierungsvorrichtung (10) in einer vorherbestimmten Abdeckungszone (Z1, Z2, Z3, Z4, Z5) aktiv ist.

## Claims

1. A method for controlling a network of dynamic arrow devices, each dynamic arrow device (10) comprising at least one directional display member configured to indicate at least an information along a determined orientation, comprising the following steps:
- Step E1: Collecting the destination (D) of a user (U),
- Step E2: Detecting the user (U) in a detection perimeter of a determined dynamic arrow device (10),
- Step E3: Comparing the destination relative to the position and a coverage area (Z1, Z2, Z3, Z4, Z5) of the determined dynamic arrow device (10), when the destination (D) is out of the coverage area (Z1, Z2, Z3, Z4, Z5) of the determined dynamic arrow device (10), an itinerary is determined by selecting at least one dynamic arrow device (10) of the network which will take over from the determined dynamic arrow device (10),
- Step E4: Sending a first control signal to the determined dynamic arrow device (10), the control signal indicating the angle of rotation to be taken by the directional display member of the determined dynamic arrow device (10),
- Step E5: Sending a second control signal to the determined dynamic arrow device (10), the second control signal indicating at least the destination (D) of the user (U), the method being **characterized in that** it further comprises the following steps:
- Step E1 a: collecting the position of the user (U)
- Step E1 b: obtaining the identity of the closest dynamic arrow device (10) to the user (U) from the comparison of the data collected in steps E1, E1a with a mapping of the network of dynamic arrow devices (10), the mapping indicating the position of each dynamic arrow device (10) and the coverage area (Z1, Z2, Z3, Z4, Z5) thereof, the steps E1 a and E1 b being prior to step E2.

2. The control method according to claim 1, wherein the presence of the user (U) in the detection perimeter (P1, P2, P3, P4, P5) of the determined dynamic arrow device (10) is detected by a user terminal (11) by comparing the position coordinates of the user (U) with the position of the determined dynamic arrow device (10), the presence of the user (U) in the detection perimeter (P1, P2, P3, P4, P5) being transmitted to at least one server (12) which triggers steps E3, E4 and E5.

3. The control method according to any one of claims 1 or 2, wherein the identity of the closest dynamic arrow device (10) to the user (U) is determined by a user terminal (12) and is sent to a server (12).

4. The control method according to any one of claims 1 to 3, wherein the identity of the closest dynamic arrow device (10) to the user (U) is determined by a server (12).

5. The control method according to any one of claims 1 to 4, comprising an additional step E1c in which the mode of locomotion of the user (U) is collected, step E1 c being carried out before step E1 b.

6. The control method according to any one of claims 1 to 5, comprising an additional step E1d in which a visual identification indicator of the user (U) is collected, the step E1d being carried out prior to step E5.

7. The control method according to a feature of the invention 1 to 6, further comprising an additional step E6 of display stop in which the server (12) sends a third control signal to the closest dynamic arrow device (10) to the user (U) indicating the stop of the display of the directional member of the closest dynamic arrow device (10) to the user (U).

8. A guide system (1) in a given area arranged to implement the control method according to any one of claims 1 to 7, said guide system (1) comprising at least one network of dynamic arrow devices (10), each dynamic arrow device (10) comprising at least one directional display member configured to indicate at least an information along a determined orientation, at least one server (12) configured to receive data from a user terminal (11), said server (12) controlling each dynamic arrow device (10) of the network depending on the data sent by the user terminal (11).

9. The guide system according to claim 8, wherein the network of dynamic arrow devices (10) comprises at least one first and one second dynamic arrow device (10), each dynamic arrow device (10) being active in a predetermined coverage area (Z1, Z2, Z3, Z4, Z5).
